# EUROPEAN PATENT APPLICATION

(11) **EP 4 589 393 A1**
(43) Date of publication of application: **23.07.2025**
(21) Application number: 24783996.2
(22) Date of filing: 05.03.2024
(51) Int. Cl.: G05B 19/042

(54) **REMOTE DRIVING METHOD AND APPARATUS, ELECTRONIC DEVICE, STORAGE MEDIUM, AND PROGRAM PRODUCT**

(30) Priority: 07.04.2023 CN 202310406488
(71) Applicant: Tencent Technology (Shenzhen) Company Limited, Shenzhen, Guangdong 518057 (CN)
(72) Inventor: ZHANG, Liming, Shenzhen, Guangdong 518057 (CN)
(74) Representative: EP&C
(86) International application number: PCT/CN2024/080030
(87) International publication number: WO 2024/207911

(57) **Abstract**

A remote driving method and apparatus, an electronic device, a storage medium, and a program product. The method comprises: displaying a first environment image corresponding to a target vehicle, the first environment image comprising an image of at least a part of a target environment corresponding to the target vehicle when the target vehicle is at a first position, and the first environment image being generated on the basis of local scene data corresponding to the first position in global scene data of the pre-constructed target environment; and in response to a vehicle driving operation of a driver for the target vehicle, using the local scene data corresponding to the current position of the target vehicle to display a second environment image corresponding to the current position.

## Description

### RELATED APPLICATION

This disclosure claims priority to Chinese Patent Application No. 202310406488.7, filed with the China National Intellectual Property Administration on April 07, 2023 and entitled "REMOTE DRIVING METHOD AND APPARATUS, ELECTRONIC DEVICE, STORAGE MEDIUM, AND PROGRAM PRODUCT", which is incorporated herein by reference in its entirety.

### FIELD OF THE TECHNOLOGY

This disclosure relates to the technical field of cloud technology, intelligent traffic, autonomous driving, remote driving, and the like, and in particular, to a remote driving method and apparatus, an electronic device, a storage medium, and a program product.

### BACKGROUND OF THE DISCLOSURE

Remote driving is a driving technology in which a backend server takes over a driving right, and a staff member of the backend server performs operations remotely in a driving simulator cabin to control driving of an automobile.

In the related art, a plurality of cameras are disposed on a driving vehicle, to collect video information of a surrounding environment of the vehicle, and the video information is transmitted back to a remote driving simulator cabin through a network, and displayed in the driving simulator cabin. A remote driver obverses the video information of the surrounding environment of the vehicle based on displayed video images, and then controls a steering wheel, an accelerator pedal, and the like in the driving simulator cabin. Operation information of the remote driver in the driving simulator cabin is transmitted to the driving vehicle through the network, to control driving of the vehicle.

### SUMMARY

Embodiments of this disclosure provide a remote driving method, executable by a remote driving device and including:
outputting a first environment image for a target vehicle in response to a remote driving request, the first environment image comprising at least one part of a driving environment of the target vehicle being at a first location, and the first environment image being generated based on first local scene data corresponding to the first location, the first local scene data being acquired from pre-obtained global scene data of the driving environment; and
outputting a second environment image for the target vehicle in response to a remote driving operation and receiving a second location of the target vehicle, the second environment image comprising at least one part of the driving environment of the target vehicle being at a second location.

In a possible implementation, a method for acquiring the global scene data of the driving environment includes:
scanning the driving environment by using a scanning device, to obtain point cloud data of the driving environment; and
performing three-dimensional modeling on the driving environment based on the point cloud data, the global scene data being model data of an environment model obtained through modeling.

The embodiments of this disclosure provide a remote driving method, executable by a server and including:
transmitting, in response to receiving a remote driving request from a remote driving device, a first location of a target vehicle and first local scene data corresponding to the first location to the remote driving device, the first local scene data being acquired from pre-obtained global scene data of a driving environment and used for the remote driving device to display a first environment image, the first environment image comprising at least one part of the driving environment of the target vehicle being at a first location;
transmitting, in response to receiving a driving instruction from the remote driving device, the driving instruction to the target vehicle, the driving instruction being triggered by the remote driving device performing a remote driving operation on the target vehicle; and
transmitting, in response to receiving a second location of the target vehicle driving based on the driving instruction, the second location of the target vehicle to the remote driving device, so that the remote driving device displays a second environment image, the second environment image comprising at least one part of the driving environment of the target vehicle being at a second location.

The embodiments of this disclosure further provide a remote driving apparatus, including:
a first display module, configured to output a first environment image for a target vehicle in response to a remote driving request, the first environment image comprising at least one part of a driving environment of the target vehicle being at a first location, and the first environment image being generated based on first local scene data corresponding to the first location, the first local scene data being acquired from pre-obtained global scene data of the driving environment; and
a second display module, configured to output a second environment image for the target vehicle in response to a remote driving operation and receiving a second location of the target vehicle, the second environment image comprising at least one part of the driving environment of the target vehicle being at a second location.

The embodiments of this disclosure further provide a remote driving apparatus, including:
a first transmission module, configured to transmit, in response to receiving a remote driving request from a remote driving device, a first location of a target vehicle and first local scene data corresponding to the first location to the remote driving device, the first local scene data being acquired from pre-obtained global scene data of a driving environment and used for the remote driving device to display a first environment image, the first environment image comprising at least one part of the driving environment of the target vehicle being at a first location;
a second transmission module, configured to transmit, in response to receiving a driving instruction from the remote driving device, the driving instruction to the target vehicle, the driving instruction being triggered by the remote driving device performing a remote driving operation on the target vehicle; and
a third transmission module, configured to transmit, in response to receiving a second location of the target vehicle driving based on the driving instruction, the second location of the target vehicle to the remote driving device, so that the remote driving device displays a second environment image, the second environment image comprising at least one part of the driving environment of the target vehicle being at a second location.

The embodiments of this disclosure provide a remote driving device, which includes a processor and a display.

The display is configured to implement any one of the foregoing remote driving methods; and the processor is configured to implement any one of the foregoing remote driving methods.

The embodiments of this disclosure provide an electronic device, which includes a memory, a processor, and a computer program stored in the memory. The processor executes the computer program to implement the foregoing remote driving method.

The embodiments of this disclosure provide a computer-readable storage medium, which has a computer program stored therein. A processor executes the computer program to implement the foregoing remote driving method.

The embodiments of this disclosure provide a computer program product, which includes a computer program. A processor executes the computer program to implement the foregoing remote driving method.

### BRIEF DESCRIPTION OF THE DRAWINGS

To describe the technical solutions in the embodiments of this disclosure more clearly, the following briefly describes the accompanying drawings used for use in descriptions of the embodiments of this disclosure.
FIG. 1 is a schematic diagram of an implementation environment of a remote driving method according to some embodiments of this disclosure.
FIG. 2 is a schematic structural diagram of a remote driving device according to some embodiments of this disclosure.
FIG. 3 is a schematic structural diagram of a driving simulator cabin according to some embodiments of this disclosure.
FIG. 4 is a schematic flowchart of a remote driving method according to some embodiments of this disclosure.
FIG. 5 is a schematic diagram of a part of a scene of an environment model according to some embodiments of this disclosure.
FIG. 6 is a schematic diagram of signaling interaction of a remote driving method according to some embodiments of this disclosure.
FIG. 7 is a schematic flowchart of a remote driving method according to some embodiments of this disclosure.
FIG. 8 is a schematic structural diagram of a remote driving apparatus according to some embodiments of this disclosure.
FIG. 9 is a schematic structural diagram of a remote driving apparatus according to some embodiments of this disclosure.
FIG. 10 is a schematic structural diagram of an electronic device according to some embodiments of this disclosure.

### DESCRIPTION OF EMBODIMENTS

The following describes the embodiments of this disclosure with reference to the accompanying drawings of this disclosure. The following implementations described with reference to the accompanying drawings are exemplary descriptions for explaining the technical solutions of the embodiments of this disclosure, and do not limit the technical solutions of the embodiments of this disclosure.

In specific implementations of this disclosure, any data related to an object, such as driver information, driver's driving age, driver's experience level, a controlled vehicle associated with a driver, driver's driving operations for controlling a vehicle, and a driving route, is involved. when the embodiments of this disclosure are applied to a specific product or technology, a permission or consent of an object should be used, and collection, use, and processing of relevant data should comply with relevant laws and regulations and standards of relevant countries and regions.

In the related method, data is transmitted by using a camera to a driving simulator cabin in real time, resulting in large bandwidth occupancy. Particularly, a plurality of driving simulator cabins in a same network easily cause network congestion, and stability and instantaneity of video transmission cannot be ensured. Consequently, stability of remote driving and actual driving efficiency are relatively poor.

Therefore, this disclosure provides a remote driving method and apparatus, an electronic device, a storage medium, and a program product, to improve stability of remote driving and driving efficiency.

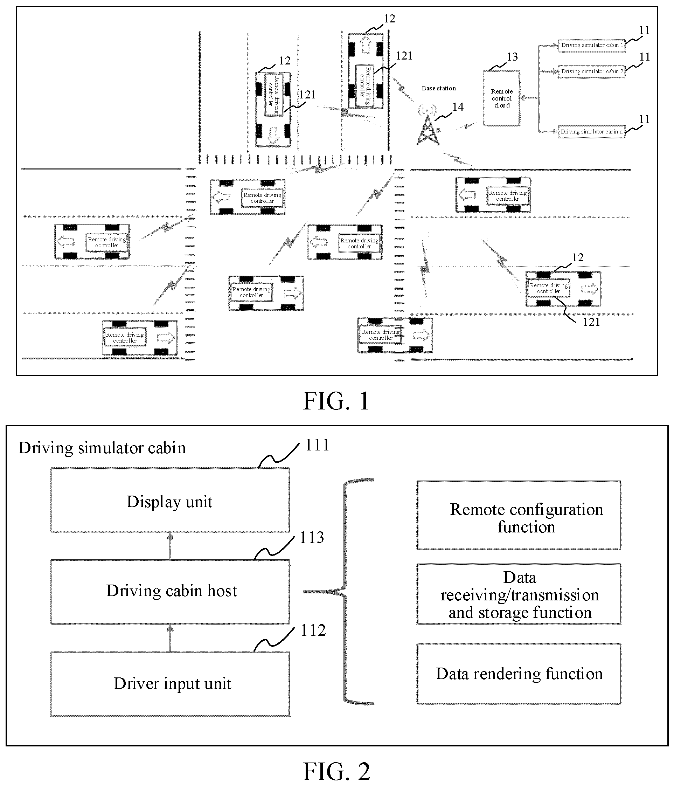

FIG. 1 is a schematic diagram of an implementation environment of a remote driving method according to some embodiments of this disclosure. As shown in FIG. 1, Some embodiments includes: a remote driving device 11, a vehicle 12, and a server 13. The server 13 establishes a communication connection to the remote driving device 11 and the vehicle 12, respectively.

In the embodiments of the present disclosure including the embodiments of both the claims and the specification (hereinafter referred to as "all embodiments of the present disclosure"), the remote driving device 11 may be a control device configured to remotely drive the vehicle 12. In some embodiments, a driver may perform a driving operation on the remote driving device 11, to control driving of the vehicle 12. The remote driving device 11 may transmit a control instruction corresponding to the driving operation of the driver to the server 13, and the server 13 transmits the control instruction to the vehicle 12 controlled by the remote driving device 11. The vehicle 12 may drive according to the driving operation of the driver on the remote driving device 11 based on the received control instruction.

In an example, as shown in FIG. 2, the remote driving device 11 is a driving simulator cabin, which includes a display unit 111, a driver input unit 112, and a driving cabin host 113.

The display unit 111 is configured to display a surrounding environment in which the vehicle 12 may drive. The display unit 111 may include any one or more components having a display function, such as an electronic display screen, a projector, a curved screen, a foldable screen, and a multi-panel screen.

The driver input unit 112 is configured to receive a driving operation input by a driver. The driver input unit 112 may be a simulant of a component in the vehicle 12 that can be operated by the driver. The driver input unit 112 may include, but is not limited to, a steering wheel, an accelerator pedal, and a brake pedal. The driver input unit 112 may be a virtual component, such as a virtual steering wheel, a virtual accelerator pedal, or a virtual brake pedal that has a corresponding physical function and that is displayed on a display screen; or may be a component having a physical structure such as a physical steering wheel or a physical accelerator pedal.

The driving cabin host 113 may be a real machine or a virtual machine that provides certain functions for the remote driving device 11. In this disclosure, the driving cabin host 113 may provide at least one of a data receiving/transmission and storage function, a data rendering function, and a remote configuration function. For example, the data receiving/transmission and storage function is configured to receive/transmit a control instruction correspondingly triggered by a driver, receive and store scene data of a driving environment in which the vehicle 12 is located, and the like. For example, the data rendering function is configured to perform rendering based on the scene data, to generate corresponding rendered image data, and then, the display unit 111 displays a corresponding image based on the rendered image data. For example, the remote configuration function allows a user to remotely configure a vehicle on the driving cabin host 113, for example, select a vehicle to be driven remotely, or start the vehicle.

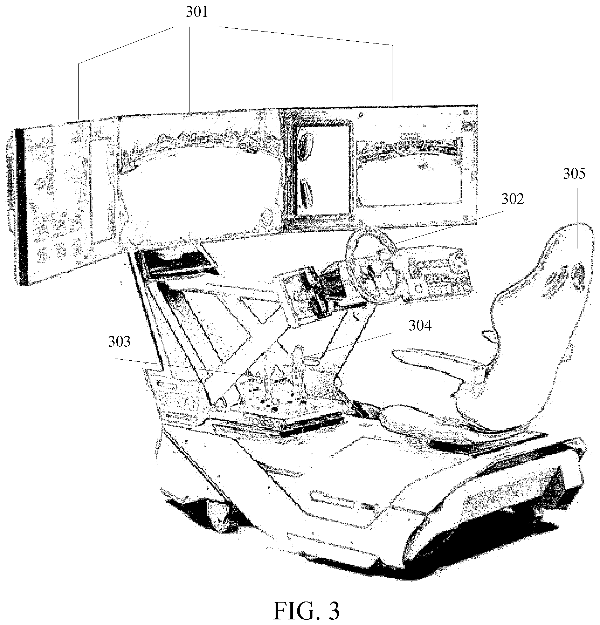

In addition, the remote driving device 11 may be any physical device that simulates an internal driving environment of a vehicle and that has a display function. For example, the remote driving device 11 may be a driving simulator cabin. FIG. 3 is a schematic structural diagram of a possible driving simulator cabin. As shown in FIG. 3, the driving simulator cabin is equipped with devices such as a plurality of display screens 301, a steering wheel 302, an accelerator pedal 303, and a brake pedal 304. In some embodiments, the driving simulator cabin may further be equipped with a seat 305 simulating a vehicle driver's seat, and the driver may sit in the seat 305 to operate the steering wheel 302, the accelerator pedal 303, the brake pedal 304, and the like based on a surrounding driving environment of the vehicle that is displayed on a display screen 301.

For another example, the remote driving device 11 is another device that has a display function and that supports a driving operation of a driver, such as a driving console including a display screen and some specific function buttons, or a computer device having a plurality of screens or a single screen, a personal computer, a smartphone, or an electronic game terminal for simulating driving. The specific function buttons may include, but are not limited to, a virtual display button, a physical key, and the like that have functions the same as those of vehicle driving components such as a steering wheel, an accelerator pedal, and a brake pedal.

In some embodiments, a remote driving controller 121 may be mounted on the vehicle 12.

The remote driving controller 121 is configured to control the vehicle 12 based on a control instruction transmitted by the server 13. The remote driving controller 121 may communicate with the vehicle 12 to acquire driving information of the vehicle 12, such as a speed, a steering wheel rotation direction, and fuel consumption. The remote driving controller 121 further has a positioning function. In a process in which the remote driving device 11 controls driving of the vehicle 12, the remote driving controller 121 may transmit real-time positioning information and driving information, such as a speed and fuel consumption, of the vehicle 12 to the server 13, and then, the server 13 synchronizes the information to the remote driving controller 121 in real time.

Some embodiments may further include a base station 14. The base station 14 is configured to implement real-time communication between the remote driving control 121 and the server 13. For example, the remote driving control 121 transmits the real-time positioning information, the driving information, and the like to the server 13 through the base station 14, and receives the control instruction transmitted by the server 13.

In a scene example, as shown in FIG. 1, the server 13 is a remote control cloud in FIG. 1, and the remote driving device 11 is the driving simulator cabin in FIG. 1. Some embodiments may include a plurality of driving simulator cabins, a plurality of vehicles mounted with remote driving controllers, a remote control cloud, and a base station. The plurality of driving simulator cabins, such as a driving simulator cabin 1, a driving simulator cabin 2, ..., and a driving simulator cabin n, may control corresponding controlled vehicles in the plurality of vehicles through the remote control cloud and the base station. One driving simulator cabin may be associated with one or more controlled vehicles, and may simultaneously control driving of the one or more controlled vehicles.

In the embodiments of this disclosure, the vehicle may refer to a driving vehicle in any form that has a driving function. For example, the vehicle may include a two-wheel vehicle, a four-wheel automobile, a three-wheel motor vehicle, or a more-wheel vehicle, may further include a mechanical device supporting a lifting and handling operation, such as an excavator, an unmanned excavator, or a crane, and may further include an intelligent mobile machine that has a moving function and a vehicle body, such as an intelligent robot, an electronic intelligent machine dog, a wheel-leg hybrid quadruped robot, a movable dual-arm robot, or a mobile robot used in a shopping mall or an exhibition hall.

A specific type, an appearance form presented, a moving or driving manner, and the like of the vehicle are not limited in this disclosure, and a type, a quantity, and an appearance form, and the like of a vehicle controlled by the remote driving device 11 are not limited in this disclosure either.

The server 13 may be a remote driving cloud, and may be configured to receive/transmit data; may further store location information uploaded by each vehicle, such as high-precision positioning information; may further store global scene data of a driving environment, such as model data of a three-dimensional visual model of a closed road environment; and may further be configured to receive/transmit and store a driving instruction of the remote driving device 11.

The server 13 may be an independent physical server, or a server cluster or distributed system that is composed of a plurality of physical servers, or a cloud server or server cluster that provides basic cloud computing services such as a cloud service, a cloud database, cloud computing, a cloud function, cloud storage, a network service, cloud communication, and a big data and artificial intelligence platform. The terminal may be a smartphone, a tablet computer, a notebook computer, a digital broadcast receiver, a desktop computer, an on-board terminal (such as an on-board navigation terminal or an on-board computer), a smart speaker, a smartwatch, or the like. The terminal and the server may be directly or indirectly connected based on a wired or wireless communication protocol, or may be determined according to actual application scenario requirements. This is not limited in this disclosure.

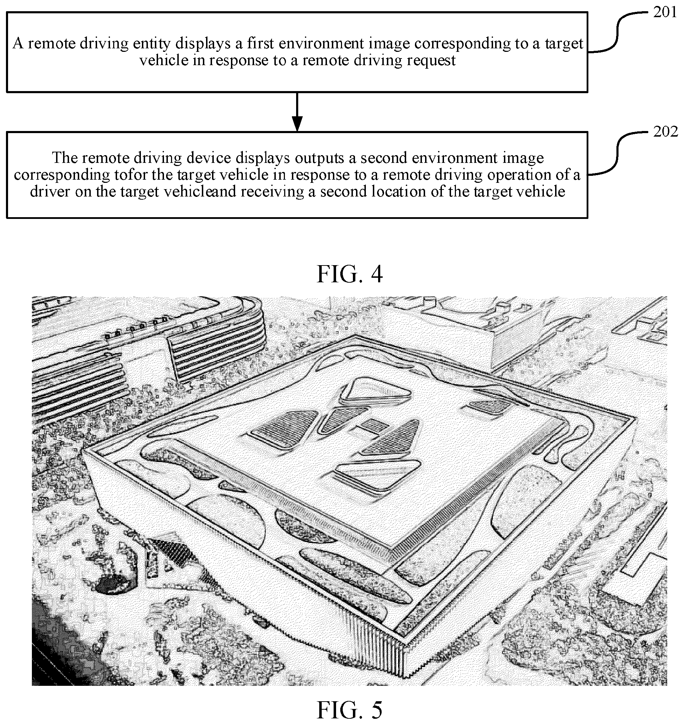

FIG. 4 is a schematic flowchart of a remote driving method according to some embodiments of this disclosure. An executive subject of the method may be a remote driving device. The remote driving device may be any electronic device such as a driving simulator cabin for remotely simulating driving, a driving console having a display function, a terminal having a single screen or a plurality of screens, or a video game terminal for simulating driving. As shown in FIG. 4, the method includes the following operations.

Operation 201: A remote driving device outputs a first environment image for a target vehicle in response to a remote driving request.

The first environment image includes at least one part of a driving environment of the target vehicle being at a first location. The first environment image is generated based on first local scene data corresponding to the first location, and the first local scene data is acquired from pre-obtained global scene data of the driving environment. When the first local scene data is equal to the global scene data, the first environment image includes the whole driving environment. When the first local scene data is less than the global scene data, the first environment image includes one part of driving environment, and the one part includes the first location.

The following first describes the driving environment.

In the embodiments of the present disclosure including the embodiments of both the claims and the specification (hereinafter referred to as "all embodiments of the present disclosure"), a driving environment may be a target environment including the target vehicle. The driving environment may include a road for a vehicle to drive, and further include scene elements such as a building, a facility, a traffic sign, a traffic light, a tree, a lawn, a river, and a mountain. In some examples, the driving environment may be a physical environment in the real world. For example, the driving environment is an industrial environment such as a factory workshop or an industrial park; or an operation environment such as a mine area or a port area; or a special environment area that is affected by a debris flow or affected by a climatic factor such as a rainstorm or a snowstorm. In another example, the driving environment is a virtual environment. For example, a virtual environment is constructed by using some virtual scene elements, such as roads and building, at a testing stage, such as a virtual environment area that simulates a debris flow scene, a test operation environment that simulates a port, a mine, or the like under severe climatic conditions, or a virtual park environment that simulates a work process in an industrial park.

In some examples, the driving environment is a closed driving environment. The closed driving environment provides an environment in which a plurality of vehicles including the target vehicle drive, and the plurality of vehicles drive under the control of corresponding remote driving devices. The closed driving environment does not include pedestrians and another vehicle that is not controlled by the remote driving device. In another example, the driving environment is an open driving environment. The open driving environment includes not only the vehicle that may drive under the control of the remote driving device, but also pedestrians, vehicles that are not controlled by the remote driving device, bicycles, and the like.

The following describes the global scene data.

The global scene data of the driving environment is configured to present a scene image taking the driving environment as a prototype. The global scene data of the driving environment carries a scene element in the driving environment. The scene element refers to an element forming a scene in the driving environment, such as a road, a traffic sign, and a traffic light. The scene element in the driving environment may include a static scene element and a dynamic scene element. The static scene element refers to a scene element that is stationary and unchanged in an update period of the driving environment, and may include, but is not limited to, a road, a traffic sign, and a building body, a wall body, a lawn, and the like on both sides of the road. The dynamic scene element refers to a scene element whose presentation state is changeable in an update period of the driving environment, and may include, but is not limited to, a traffic light, a clock tower, and the like.

In an example, the global scene data includes scene data corresponding to each scene element in the driving environment. For example, the scene data includes, but is not limited to, data such as a shape, a color, and location coordinates of a scene element. For example, scene data corresponding to a road includes a shape and a location of the road, a color of each location point on a road surface, a shape and a color of a traffic line on the road surface, and the like. In another example, the global scene data includes each location point in the driving environment and rendered image data corresponding to each location point. The location point may be location coordinates covered by the driving environment, and the rendered image data may include red, green, and blue (RGB) data, brightness data, and the like corresponding to the location coordinates.

In some embodiments, the global scene data of the driving environment is constructed and stored before performing the remote driving method. In some embodiments, a method for acquiring the global scene data includes operation A1 and operation A2.

Operation A1: A scanning device scans the driving environment, to obtain point cloud data of the driving environment.

Operation A2: Perform three-dimensional modeling on the driving environment based on the point cloud data, the global scene data being model data of an environment model obtained through modeling.

In an example, the scanning device includes a LiDAR device. The LiDAR device may be controlled to move in the driving environment, and obtain the point cloud data of each location in the driving environment through scanning during moving. The point cloud data may include location coordinates of a plurality of key location points in the driving environment, as well as color information, reflection intensity information, and the like of each location point. Then, three-dimensional modeling is performed based on the point cloud data. For example, the LiDAR device is mounted on a driving vehicle or a flying unmanned aerial vehicle, to complete scanning of each location point in the driving environment.

In another example, the scanning device further includes an image capture device such as a three-dimensional (3D) camera. If the point cloud data includes only location coordinates of key location points, image data, such as a color and light intensity, of each location point may further be obtained through scanning by the 3D camera. Three-dimensional modeling is performed based on the point cloud data obtained through scanning by the LiDAR device and the data obtained through scanning by the 3D camera.

In addition, the location coordinates in the point cloud data or the global scene data may be location coordinates in a world coordinate system. For example, the world coordinate system may be the World Geodetic System 1984 (WGS84).

In an example, operation A1 and operation A2 are performed by another device. For example, a dedicated environmental monitoring device pre-constructs global scene data, and transmits the pre-obtained global scene data to a server before the remote driving device activates remote driving, and the server stores the global scene data. In some embodiments, the server may alternatively directly perform operation A1 and operation A2. For example, the server establishes a communication connection to the scanning device, acquires point cloud data through the communication connection before remote driving is activated, and constructs global scene data by using operation A2 and stores the global scene data. An executive subject of operation A1 and operation A2 is not limited in this disclosure. Based on this, when activating driving of the target vehicle, the remote driving device may acquire the global scene data or the local scene data of the at least one part of the driving environment corresponding to the location of the target vehicle from the server. In some embodiments, the server may periodically update the global scene data. The server may update the global scene data of the driving environment based on an update period corresponding to the driving environment. The driving environment carried in the global scene data may be a relatively fixed environment that does not change in the update period. For example, if the update period is 1 day, the scene element in the driving environment is a scene element that does not change in one day, such as a temporary road block or vegetation. In a scene in which an environment changes frequently, such as a construction site, an increased update frequency of global scene data is used. Correspondingly, a range of a static object that is taken into the environment also changes. For example, a building structure under construction, a building material heap, or the like is taken as a dynamic element, and an element that remains unchanged in the update period, such as a temporarily built fence or support, is considered as a relative static element in the update period.

FIG. 5 shows a part of an environment model corresponding to a driving environment. As shown in FIG. 5, static elements, such as a lawn, a road, a building body, and a wall body, in the driving environment are restored in the part of the environment model.

In addition, in this disclosure, the process of acquiring the global scene data is described only by using an example in which three-dimensional modeling is performed based on the point cloud data. For example, another data is further acquired for three-dimensional modeling, or environment model data of two-dimensional modeling or environment model data of four-dimensional modeling is taken as the global scene data. This is not limited in this disclosure.

In some embodiments, the remote driving device activates remote driving based on a trigger operation of a driver. In an example, the remote driving device displays a plurality of candidate vehicles, and the driver selects the target vehicle from the candidate vehicles, to activate remote driving of the target vehicle. In another example, the server allocates the target vehicle to the driver, and the remote driving device activates remote driving of the allocated vehicle. Correspondingly, remote driving of the target vehicle may be activated in the following manner: manner 1 or manner 2.

Manner 1: The remote driving device outputs a remote configuration page in response to a first driving trigger operation, and receives a selection operation on the target vehicle among at least one candidate vehicle.

Vehicle information of the at least one candidate vehicle is displayed on the remote configuration page. The remote driving request is a first driving request triggered by the selection operation. In some embodiments, the first driving trigger operation is an operation that triggers configuration of remote driving. The first driving trigger operation includes, but is not limited to, a startup operation on a remote driving platform, a trigger operation on a configuration button on a page of the platform, and the like. For example, a selection control respectively corresponding to each candidate vehicle is displayed on the remote configuration page, and the driver triggers a selection control corresponding to the target vehicle based on the vehicle information of each candidate vehicle displayed on the page. A prompt page that prompts whether to start may further pop up on the remote configuration page, and the driver may trigger a driving starting control on the prompt page, to start remote driving of the target vehicle. In some embodiments, remote driving may alternatively be directly triggered when a trigger operation on the selection control is detected.

Corresponding to manner 1, an implementation of operation 201 may include: the remote driving device triggers the first driving request when detecting the selection operation on the target vehicle on the remote configuration page; and outputs the first environment image in response to the first driving request. The remote driving device may transmit the first driving request to the server. The first driving request is configured to request remote driving of the target vehicle, and the first driving request may carry identifier information of the target vehicle.

In some embodiments, the remote configuration page may further include historical driving information of the driver, for example, data such as a driving times, a driving time, a historical driving route, and a historical driving area of a historically driven vehicle in the candidate vehicles.

In some embodiments, the vehicle information of the candidate vehicle may include identifier information for uniquely identifying a vehicle, and may further include static information such as a size, a shape, and a color of the vehicle. For example, the vehicle information is shown in Table 1.

**Table 1**

| Serial No. | Vehicle Identification Number (VIN) | License plate number | Length | Width | Height | Color | Maximum rotation angle of a steering wheel | Maximum speed | Used driver license |
|---|---|---|---|---|---|---|---|---|---|
| 1 | XXX1 | Jing A XXXX2 | 6 m | 2.2 m | 2 m | Red | 540° | 100 km/h | B2 |
| 2 | XXX2 | Jing A XXXX1 | 5.5 m | 1.9 m | 1.5 m | White | 500° | 80 km/h | C1 |

Manner 2: The remote driving device outputs an information entry page in response to a second driving trigger operation, and receives a driver information entry operation based on an entry control.

The entry control configured to enter driver information is displayed on the information entry page. The remote driving request is a second driving request triggered by the driver information entry operation. For example, the entry control is an information input box, a candidate selection button, or the like, and the driver information may include, but is not limited to, information about a driving license type and a driving experience level of the driver, a size, a type, and operation difficulty of a historically driven vehicle, and the like. The remote driving device triggers the second driving request based on the entered driver information when detecting the entry operation triggered by the entry control. The entry operation may include an operation of triggering the entry control and inputting information, and may further include a trigger operation on a confirmation control on the page, and the like.

In some embodiments, the second driving trigger operation may be an operation that triggers entry of driver information. In an example, the second driving operation is a startup operation on the remote driving platform, a driver login operation, or the like. For example, the information entry page is a login page, and the entry operation is a login information input operation. The remote driving device may acquire, according to login information such as an input login account and an input user name, driver information associated with the login information, and allocate a corresponding remote driving vehicle to the driver based on the driver information. In another example, an allocation button configured to request allocation of a remote driving vehicle is displayed on the platform page. The second driving operation may alternatively be a trigger operation on the allocation button on the platform page.

In some embodiments, after the remote driving device transmits the second driving request to the server, the server may perform matching in global candidate vehicles based on the driver information, to obtain a plurality of matching vehicles that are matched with the driver information, and provide information about the plurality of matching vehicles to the remote driving device. The remote driving device may display vehicle information of the plurality of matching vehicles provided by the server, such as information about a plurality of vehicles that are matched with a driving license, a driving experience level, and the like of the driver. The driver may alternatively select the target vehicle from the plurality of matching vehicles, and the remote driving device detects a selection operation of the driver on the target vehicle in the plurality of matching vehicles, and transmits a remote driving request for the target vehicle to the server.

The second driving request is configured to request allocation of a vehicle for remote driving. Corresponding to manner 2, an implementation of operation 201 may include: the remote driving device triggers the second driving request based on the entered driver information when detecting the entry operation on the information entry page; displays a second environment image in response to the second driving request. The remote driving device may transmit the second driving request to the server. For example, the second driving request carries current login information, such as a driver ID, and a driving license ID, a login name, and a login account of the driver. Then, the server acquires the associated driver information based on the current login information. For another example, the second driving request carries driver information.

In some embodiments, the first location is an initial location of the target vehicle when remote driving is started. For example, the initial location is an end location of the target vehicle in a latest historical driving process, or a pre-obtained default start location. In some other embodiments, the first location is a location of the target vehicle during driving after remote driving is started. For example, after remote driving is started, the remote driving device updates the displayed environment image according to a pre-obtained period. The first environment image may be an environment image correspondingly displayed in a previous period.

In operation 201, the remote driving device receives the global scene data of the driving environment or first local scene data from the server in response to the first driving request or the second driving request, the first local scene data being scene data of at least one part of the driving environment corresponding to the first location; and the remote driving device outputs the first environment image based on the received global scene data or the received first local scene data.

In some embodiments, the first environment image is an image including at least one part of the driving environment wherein the target vehicle is located in the first location. The at least one part of the driving environment corresponding to the first location includes: the driving environment including the first location, or only one part of the driving environment, including the first location. That is, the first environment image may include a plurality of global scene elements in the whole driving environment or some local scene elements in one part of the driving environment.

For example, the remote driving device may render the first local scene data to obtain rendered image data of local scene elements in one part of the driving environment, and display, based on the rendered image data, the image of the one part of the driving environment including the first location. For another example, the remote driving device may render the global scene data, to obtain rendered image data of global scene elements in the whole driving environment in which the first location is located, and display a complete environment image based on the rendered image data of the global scene elements.

In some embodiments, the remote driving device may display the image of the one part of the driving environment from the perspective of the target vehicle. The one part of the driving environment from the perspective of the target vehicle refers to a surrounding environment around the location of the target vehicle. For example, the surrounding environment of the target vehicle is defined as an area visible from the first location. Environment elements in the first environment image may be arranged based on locations relative to the target vehicle and according to a particular rule, for example, arranged according to a rule of near elements appearing larger and far elements appearing smaller.

In some embodiments, the one part of the driving environment is an environment that is within a particular area range and that is obtained based on the first location. For example, the one part of the driving environment corresponding to the first location includes a surrounding area around the first location, for example, a spatial area within a preset distance range centered on the first location in the driving environment, such as an environment area within 10 meters, 30 meters, or 100 meters of the target vehicle. For example, the one part of the driving environment is an environment within a specified angle range, such as an environment in front of the target vehicle, a surrounding environment on left and right sides of the target vehicle, a surrounding environment within a specified 270-degree range centered on the target vehicle, or a surrounding 360-degree panoramic environment.

In the embodiments of this disclosure, the remote driving device further displays status data such as a surrounding vehicle, environment weather, and illumination in the first environment image. Correspondingly, an implementation of operation 201 includes at least one of manner 1 to manner 4.

Manner 1: Output a first image in response to the first driving request or the second driving request.

The first environment image may be the first image. The first image includes the at least one part of the driving environment of the target vehicle being at the first location and a plurality of surrounding vehicles of the target vehicle. For example, scene elements such as roads, buildings, and traffic signs in the surrounding environment are displayed in the first image. Surrounding vehicles, such as a stationary surrounding vehicle and a driving surrounding vehicle, in the surrounding environment may be further displayed. For example, information, such as an actual shape, a color, a license plate, a vehicle type, and a driving status of the surrounding vehicle is restored and displayed in the first image. The driving status includes, for example, rear lights flashing indicating an impending turn, decelerating, and preparing to pull over.

Correspondingly, operation 201 may include: the remote driving device receives location information of each of a plurality of vehicles corresponding to the driving environment from the server in response to the first driving request or the second driving request, and determines each surrounding vehicle of the target vehicle based on the location information of each vehicle; and displays the first image based on the global scene data or the first local scene data, and the location information of each surrounding vehicle. The surrounding vehicles are displayed at corresponding locations in the first image. The vehicles corresponding to the driving environment may be vehicles located in the driving environment and may include the target vehicle and the surrounding vehicles of the target vehicle.

The remote driving device may display the surrounding environment of the target vehicle in a second image and display the surrounding vehicles in the surrounding environment based on the location information. In addition, the target vehicle may transmit location information of the target vehicle to the remote driving device. For example, a driving controller mounted on the target vehicle performs positioning on the target vehicle to obtain the location information and transmits the location information to the server, and the server synchronizes the location information of the target vehicle to the remote driving device. For vehicles other than the target vehicle, a manner similar to that of the target vehicle may be adopted, and other vehicles may transmit respective location information to other associated remote driving devices. The remote driving device may acquire the location information of the other vehicles from the other remote driving devices corresponding to the other vehicles.

Manner 2: Output a second image in response to the first driving request or the second driving request.

The first environment image may be the second image. The second image includes the at least one part of the driving environment of the target vehicle being at the first location, as well as each surrounding vehicle and relative location information between each surrounding vehicle and the target vehicle.

Correspondingly, operation 201 may include: the remote driving device receives driving status and location information of each vehicle in the driving environment from the server in response to the first driving request or the second driving request, and determines relative location information and relative driving status between each surrounding vehicle and the target vehicle based on the location information and the driving status of each vehicle; and displays the second image based on the global scene data or the first local scene data, and the relative location information and the relative driving status between each surrounding vehicle and the target vehicle.

In some embodiments, the remote driving device may further display the relative location information and the relative driving status between the target vehicle and each surrounding vehicle in the second image. For example, relative distances between the target vehicle and the surrounding vehicles are marked in the second image. For example, the target vehicle is 10 meters away from a front vehicle and 20 meters away from a rear vehicle. The relative driving statuses of the surrounding vehicles relative to the target vehicle, such as whether a speed is slower or faster, and whether a surrounding vehicle is about to turn or pull over, may be further marked.

Manner 3: Display a third image in response to the remote driving request being the second driving request.

The first environment image may be the third image. The third image includes the at least one part of the driving environment of the target vehicle being at the first location and the vehicle information of the target vehicle allocated by the server.

Correspondingly, operation 201 may include: the remote driving device receives the vehicle information of the allocated target vehicle from the server in response to the second driving request; and displays the third image based on the global scene data or the first local scene data, and the vehicle information of the target vehicle.

In some embodiments, if the target vehicle is a vehicle allocated by the server based on the driver information, the remote driving device may further display the vehicle information of the allocated target vehicle in the third image. In this way, the driver can timely learn a situation of the vehicle on which a remote driving operation is performed.

Manner 4: Display a fourth image in response to the first driving request or the second driving request.

The first environment image may be the fourth image. The fourth image includes the at least one part of the driving environment of the target vehicle being at the first location and status data of the driving environment, and the status data includes at least one of meteorological data, light intensity, and current status of a dynamic object located in the at least one part of the driving environment.

Correspondingly, operation 201 may include: the remote driving device receives the status data of the driving environment from the server in response to the first driving request or the second driving request, the status data including at least one of meteorological data, light intensity, and current status of a dynamic object located in the at least one part of the driving environment; and the remote driving device displays the fourth image based on the global scene data or the first local scene data, and the status data.

In some embodiments, the object with the changeable status may include a dynamic element in the driving environment, such as a traffic light and a clock tower. For example, a current status of the traffic light is whether a currently indicated traffic light is red, green, or yellow.

Operation 202: The remote driving device outputs a second environment image for the target vehicle in response to a remote driving operation and receiving a second location of the target vehicle.

The second environment image includes at least one part of the driving environment of the target vehicle being at a second location. The second location is a real-time location when the target vehicle is derived remotely in response to the remote driving operation, and is reported by the target vehicle to the remote driving device through a server.

The remote driving operation may be a driving operation of the driver performed on the remote driving device to control driving of the target vehicle, such as a rotation operation on a steering wheel in a driving simulator cabin, or a trampling operation on a brake pedal or an accelerator pedal. In this operation, the remote driving device may acquire, based on the second location, second scene data of at least one part of the driving environment, corresponding to the second location, in the driving environment; the remote driving device may perform rendering based on the global scene data or the second scene data, to obtain rendered image data corresponding to the second location, and display the second environment image on a display screen based on the obtained rendered image data.

In some embodiments, the second environment image may include, but is not limited to, at least one of the following: a surrounding vehicle, a location of the surrounding vehicle relative to the target vehicle, and status data corresponding to a location at a next moment. Correspondingly, an implementation of outputting the at least one piece of information in the second environment image is a process the same as a corresponding manner in manner 1, manner 2, or manner 4 in operation 201, and details are not described herein again.

In some embodiments, the remote driving device further predicts a driving condition of the target vehicle, and displays the predicted driving condition to the driver. The remote driving device may display a current driving condition and the predicted driving condition on a split screen.

In some embodiments, the remote driving device at least includes a first split screen and a second split screen. Correspondingly, a process of outputting the second environment image in operation 202 may include: the second environment image is displayed on the first split screen. A process of prediction and outputting a predicted condition may be implemented by operation B1 and operation B2.

Operation B1: The remote driving device predicts, based on the second location and driving status of the target vehicle, a third location of the target vehicle at a next moment.

Operation B2: The remote driving device outputs, on the second split screen, a third environment image comprising at least one part of the driving environment of the target vehicle being at the third location.

The driving status may include a driving speed and a driving direction of the target vehicle. The remote driving device may predict a third location to which the target vehicle arrives at the next moment based on the second location, the driving speed, and the driving direction at the current moment. The remote driving device may acquire, based on the third location at the next moment, third scene data of at least one part of the driving environment corresponding to the third location at the next moment; and the remote driving device may render the global scene data or the third scene data, to obtain the rendered image data corresponding to the third location at the next moment, and display the third environment image on the second split screen based on the obtained rendered image data. In some embodiments, the third environment image may further include, but is not limited to, at least one of the following: a surrounding vehicle, a location of the surrounding vehicle relative to the target vehicle, and status data corresponding to the third location at the next moment. The process is a manner the same as the process of outputting the first environment image in operation 201, and details are not described herein again.

In addition, the first split screen and the second split screen may be different display areas in one physical screen, or may be two independent physical display screens. This is not limited in this disclosure.

In some embodiments, before acquiring the location information transmitted by the target vehicle, the remote driving device predicts a location of the target vehicle in advance, to generate rendered image data for outputting the environment image. Based on this, the second location acquired from the target vehicle may be configured to validate the predicted location, and the environment image is displayed based on a validation result.

In some embodiments, before operation 202, a process of predicting the location and generating the rendered image data corresponding to the predicted location may be implemented by operation C1 to operation C3.

Operation C1: Predict, based on the driving environment and driving status information of the target vehicle, a location of the target vehicle at a current moment, to obtain a predicted location.

Operation C2: Acquire, based on the predicted location, local scene data corresponding to the predicted location from the global scene data, and status data of at least one part of the driving environment of the target vehicle being at the predicted location.

Operation C3: Render the local scene data and the status data that correspond to the predicted location, to obtain image data corresponding to the predicted location.

In some embodiments, the driving status information may include information such as a speed, a direction, and a location of the target vehicle arriving during driving. For example, a speed, a direction, and a historical location of the target vehicle at least at one historical moment are acquired, and a location the target vehicle arriving at a current moment is predicted, to obtain a predicted location. For example, based on a speed, a direction, and a location that are recorded every 1 second within 5 second before the current moment, a location at the 11^{th} second, namely, at the 11^{th} second after the current moment, is predicted.

In some embodiments, the driving status information may further include at least one of the following: information such as fuel consumption, power status, a driving trajectory of the target vehicle during driving, and a driving route in a specified working route. The remote driving device may further acquire the predicted location based on the at least one piece of information, the speed and the direction. In some embodiments, the remote driving device may predict a location of the target vehicle by using a pre-obtained target algorithm or neural network model.

For example, the remote driving device acquires, from the global scene data based on the predicted location, local scene data of at least one part of the driving environment corresponding to the predicted location. For another example, the remote driving device further acquires a surrounding vehicle of the target vehicle based on the predicted location. For another example, the remote driving device further acquires information such as relative location information and relative driving status between the surrounding vehicle and the target vehicle based on the predicted location. The remote driving device may render the acquired local scene data, the acquired surrounding vehicle, and the acquired relative location information and relative driving status between the surrounding vehicle and the target vehicle, to obtain the rendered image data corresponding to the predicted location, that is, rendered image data.

In some embodiments, if the remote driving device generates the rendered image data for rendering before the target vehicle actually transmits the second location, the remote driving device may validate the predicted location based on the received second location, when success, to display an image based on the rendered image data generated in advance.

Correspondingly, operation 202 may be implemented in the following two cases.

Case 1: Output, in response to the predicted location being matched with the second location, the second environment image based on the image data corresponding to the predicted location.

Case 2: Acquire, in response to the predicted location not being matched with the second location, local scene data and status data that correspond to the second location, and rendering the local scene data and the status data that correspond to the second location, to obtain the second environment image.

In some embodiments, if the predicted location passes validation, that is, the predicted location is matched with the received second location, the second environment image may be directly displayed based on the rendered image data generated in advance. In some embodiments, if the predicted location fails to pass verification, that is, the predicted location is not matched with the actual location, the actual second location is taken as a basis, and rendering is performed based on the local scene data and the status data that correspond to the second location, to obtain the second environment image.

In addition, operation C1 to operation C3 are performed in operation 202 according to the situation. Therefore, a sequence of receiving a location actually transmitted by a vehicle and generating rendered image data used for display can be eliminated from a procedure of the operations, to support generating the rendered image data used for display in advance. The operation of generating rendered image data may not be performed after an actual location is acquired, whereby time used for image display is shortened, smoothness of environment image display is ensured, and display time actually used in a display process is shortened.

In some embodiments, an associated vehicle having an associated relationship with the target vehicle in terms of operations in a task may drive in the driving environment. The remote driving device may further display a cooperative condition of the target vehicle and the associated vehicle based on location information of the associated vehicle.

In some embodiments, this disclosure further includes operation D.

Operation D: The remote driving device displays the driving assistance information.

The driving assistance information includes at least one of the following:
relative location information between the associated vehicle and the target vehicle;
operation status of the associated vehicle and operation status of the target vehicle;
relative operation progress between the associated vehicle and the target vehicle; and
relative operating condition information between the associated vehicle and the target vehicle.

In some embodiments, the driving assistance information is configured for assisting joint operations between the target vehicle and the associated vehicle.

For example, the remote driving device displays the driving assistance information in the second target image. For example, a driving assistance card is superposed at a certain location in an upper layer of the second target image, and then the driving assistance information is displayed in the driving assistance card. For another example, the remote driving device displays the driving assistance information on a separate page. For example, the remote driving device displays a fourth environment image, and displays the driving assistance information in the fourth environment image. For another example, the remote driving device displays the driving assistance information in an environment map, for example, displays the relative location information of the target vehicle and the associated vehicle in a global map or a local map of the driving environment.

In some embodiments, the relative location information may include, but is not limited to, locations respectively corresponding to the target vehicle and the associated vehicle that are simultaneously displayed in the global map or the local map in a comparative manner, a relative distance between the target vehicle and the associated vehicle, relative driving routes of the target vehicle and the associated vehicle, and the like. The remote driving device may acquire the relative location information based on respective location information of the target vehicle and the associated vehicle.

In some embodiments, the operation status refers to a production link, a completion status, etc. of the associated vehicle in an industrial production process. For example, the operation status is a preparation status, a transportation status of an excavator, a lifting status of a crane, or the like. For example, a road-side sensing device collects image data of the associated vehicle and the target vehicle, to obtain the operation statuses of the associated vehicle and the target vehicle from the collected image data. In addition, the road-side sensing device may be deployed in the driving environment, for example, deployed in a particular operation area or two sides of a road in the driving environment. The road-side sensing device may be a device having an image data collection function, such as a camera, a sensor, or a detection device.

In some embodiments, the operation progress may be an amount of completed operations, a proportion of the amount of completed operations in a total amount, a quantity of completed steps, or the like. In some embodiments, the road-side sensing device may acquire the operation progress; or respective operation progresses may be acquired from the target vehicle and the associated vehicle. In addition, the remote driving device may calculate a relative progress of the target vehicle and each associated vehicle based on the acquired operation progress of each vehicle.

In some embodiments, the operating condition information of the vehicle may represent an operation condition of the vehicle in an industrial production process. For example, the operating condition information includes information such as fuel consumption of the vehicle and remaining fuel of the vehicle.

For example, the remote driving device displays, from the perspective of a global environment, a relative operation condition of vehicles jointly operating. By operation D, comparison of information, such as a driving process, a moving process, and an operating condition, of the vehicles jointly operating may be performed. In this way, a driver can clearly and rapidly capture an operation condition, which helps the driver rapidly plan an operation in the operation process. Therefore, operation efficiency of the driver is effectively improved.

In some embodiments, the driving assistance information further includes driving progresses of the target vehicle and the associated vehicle in respective driving routes. The driving route is a route that the associated vehicle may drive and perform operations as configured for some tasks. The remote driving device may update the displayed locations of the target vehicle and the associated vehicle in the global or local map in real time based on the location information of the target vehicle and the associated vehicle in the driving environment, to display a dynamic process of comparative movement of the two vehicles in the global environment or the local environment.

In some embodiments, the associated vehicle may be a vehicle controlled by another remote driving device. The two vehicles having the associated relationship may be two vehicles having associated operation processes in time or space, or having operations to be coordinated or assisted with each other. For an operation process A including a sub-process A1 and a sub-process A2, a vehicle a completes the sub-process A1 during driving, and a vehicle b completes the sub-process A2 during driving based on A1. In a process in which the driver controls the vehicle b to drive, in addition to information such as a surrounding environment and a surrounding vehicle, the remote driving device may further provide a relative location change condition, an operation status change condition, relative operation progress, relative operating condition information, and the like of the target vehicle and the associated vehicle a to the driver, such as locations or relative driving speeds of the vehicle a and the vehicle b at a current moment. In this way, the driver can control the vehicle b to accelerate to the location of the vehicle a and continue to complete the operation process A2 based on the vehicle a; or the driver can control the vehicle b to go to an operation area that is not covered by the vehicle a and start operation; or if the vehicle a is anchored during driving, the driver can control the vehicle b to interrupt driving, or update the associated vehicle to a new vehicle c, or the like.

In some embodiments, the remote driving device is configured to remotely control driving of a plurality of controlled vehicles, and the target vehicle is any one of the plurality of controlled vehicles controlled by the remote driving device. The target vehicle may have an autonomous driving function. The remote driving device may acquire a surrounding road condition in real time, and the target vehicle is controlled by autonomous driving if the road condition is simple, and is remotely controlled by the remote driving device if the road condition is complex. Correspondingly, this process may be implemented by operation E1 to operation E3.

Operation E1: Acquire location information of non-controlled objects in the driving environment and location information of surrounding controlled vehicles of the target vehicle.

For example, the non-controlled object is an object that is not remotely controlled by any remote driving device. For example, if the driving environment is not a closed environment, the driving environment further includes some objects that do not use a remote driving function, such as a pedestrian, an ordinary bicycle, or an automobile that does not use remote driving. The remote driving device acquires the location information of each non-controlled object by using a road-side sensing device, and may further acquire a driving status, such as a speed and a direction, of the non-controlled object.

Operation E2: Determine traffic information of a surrounding environment of the target vehicle based on the location information of the non-controlled objects and the location information of surrounding controlled vehicles.

The surrounding controlled vehicle is a controlled vehicle that is controlled by any remote driving device and that is near to the target vehicle.

Operation E3: Output, in response to that the traffic information of the target vehicle satisfies a preset condition, prompt information, the prompt information indicating that an autonomous driving condition is satisfied.

Operation E4: Activate an autonomous driving function of the target vehicle in response to receiving an autonomous driving activation operation performed on the prompt information.

The traffic information may include information such as a degree of congestion, a quantity of non-controlled objects, a traffic volume, and a traffic speed on the road segment on which the target vehicle is driving. The preset condition may be a condition for measuring whether it is suitable to switch to the autonomous driving function. For example, the preset condition includes, but is not limited to, a low degree of congestion, a traffic volume lower than a predetermined traffic volume threshold, a traffic speed lower than a predetermined speed threshold, and the like. The remote driving device may determine, with reference to the preset condition, whether the target vehicle is suitable for autonomous driving. If the preset condition is satisfied, that is, the road condition of the road segment on which the target vehicle is driving is relatively simple, there are relatively few non-controlled objects, a traffic volume is small, and the like, driving of the target vehicle is controlled by the autonomous driving function. Otherwise, if the preset condition is not satisfied, which indicates a complex congested road segment with many vehicles and pedestrian or a low traffic speed, remote control is used.

The autonomous driving activation operation may be a confirmation operation on the prompt information, a switching confirmation/cancellation operation, or the like. For example, the remote driving device displays the prompt information, and further provides, on a page of the prompt information, a confirmation button for confirming switching to the autonomous driving function or a switching cancellation button. The autonomous driving activation operation may be a click operation on the confirmation button. Alternatively, the autonomous driving activation operation may be a switching instruction triggered by the driver on a switching button on a console. For example, the console is configured with an autonomous driving switching key, and the driver triggers switching by triggering the autonomous driving switching key. By activating the autonomous driving function, remote driving of the target vehicle may be stopped, and the target vehicle may drive based on the autonomous driving function.

According to operation E1 to operation E4, a driving function, such as remote driving or autonomous driving, of an associated vehicle may be switched in time according to a preset condition, whereby a few remote drivers can flexibly manage a plurality of controlled vehicles in real time. Consequently, management flexibility, actual driving efficiency of the driver, and management efficiency of the associated vehicle are improved.

According to the remote driving method provided in this disclosure, the first environment image that includes the at least one part of the driving environment corresponding to the first location is displayed. The global scene data is pre-obtained based on the driving environment. Therefore, the first environment image can be directly generated based on the first local scene data corresponding to the first location. When the remote driving operation is performed on the target vehicle, the second environment image of the environment corresponding to the second location can be generated based on the second local scene data corresponding to the second location and displayed. The surrounding environment of the vehicle can be displayed based on the local scene data and the location of the vehicle. The target vehicle may not transmit a captured video of the surrounding environment in real time, whereby a bandwidth occupied by data transmission during remote driving is significantly reduced. Consequently, the problem of excessively high bandwidth occupancy caused by remote driving based on real-time video image transmission is effectively solved, and a requirement for a network bandwidth is reduced, which helps improve stability of remote driving. In this way, the driver can stably control the vehicle with a low delay, to improve actual driving efficiency.

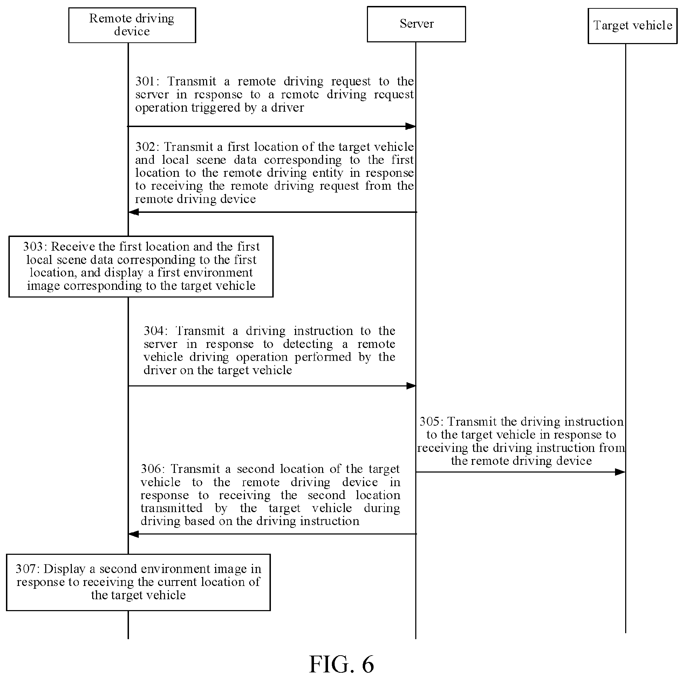

FIG. 6 is a schematic diagram of signaling interaction of a remote driving method according to some embodiments of this disclosure. The method may be implemented by interaction between a remote driving device and a server. As shown in FIG. 6, the method includes the following operations.

Operation 301: The remote driving device transmits a remote driving request to the server in response to a remote driving request operation triggered by a driver.

In some embodiments, the server may acquire vehicle information of each controlled vehicle controlled by respective remote driving device, and jointly store each vehicle and the vehicle information of the vehicle. For example, each vehicle uploads at least one piece of the following information to the server through a base station: location information, a speed, a posture, a driving status, and the like of the vehicle. The server jointly stores each vehicle and the at least one piece of information of each vehicle. For example, an identifier (ID) of the vehicle and a plurality of pieces of real-time information of the vehicle are jointly stored. For example, an ID of each vehicle and each piece of data shown in Table 1 of the vehicle are jointly stored in advance.

The server may pre-store association relationships between a plurality of vehicles and remote driving devices associated with the vehicles. The plurality of vehicles may include a vehicle driving in a same driving environment as a target vehicle, and further include another vehicle driving in an environment other than the driving environment. In this disclosure, only remote driving of the target vehicle in the vehicles is taken as an example.

In a process in which each remote driving device controls driving of each vehicle, each vehicle may transmit location information to the server through the base station.

In addition, the location information may include high-precision positioning information, such as lane-level positioning information. The lane-level positioning information includes information such as location coordinates of the target vehicle, a lane in which the target vehicle is located, and an adjacent lane line. The location information may include a geographical location during driving and a geographical location during parking. Parking includes, but is not limited to, any one or more of a complete stop, a temporary stop under the instruction of a traffic light, a longer stop due to a fault or an accident, and the like. In some embodiments, the location information may alternatively include positioning information with a normal precision.

The location coordinates in the location information may be coordinates in a world coordinate system such as the WGS84.

In addition, each vehicle may be a vehicle supporting a networking function. The networking function refers to a function of the vehicle to communicate with the remote driving device through a mobile communication network. The mobile communication network includes, but is not limited to, 4G, 5G, Cellular-V2X (C-V2X), a dedicated short-range communications (DSRC) technology, and the like. For example, communication between each vehicle and a remote driving device in a cloud is supported based on V2X communication, to implement remote-control driving.

The location information transmitted by each vehicle over the network is structured data that complies with a target communication protocol standard, such as structured data that complies with a 5G-V2X communication protocol standard.

In this disclosure, based on the high-precision positioning information provided by the vehicle and a pre-obtained three-dimensional visual model of an environment, such as the global scene data, the vehicle may only transmit the positioning information to the remote driving device, such as a driving simulator cabin, over the network. The positioning information is structured data and is transmitted in a small bandwidth, which is less than 0.1 Kbyte. The remote driving device may render the image including the vehicle and the surrounding environment of the vehicle according to the positioning information having a very small data volume and based on the pre-obtained global scene data. Hence, a requirement for a network bandwidth is significantly reduced. Furthermore, the environment information from a plurality of perspectives can be provided, which can help a remote driver to stably and precisely control the vehicle with a low delay.

The server may acquire and store another environment and global scene data pre-obtained based on the another environment in advance. In some embodiments, the server may acquire global scene data of a corresponding environment by operation A1 and operation A2. Details are not described herein again.

In some embodiments, the remote driving device transmits a first driving request or a second driving request to the server. A process is the same as the process of triggering the remote driving request in operation 201 and operation 202, and details are not described herein again.

Operation 302: The server transmits a first location of a target vehicle and first local scene data corresponding to the first location to the remote driving device in response to receiving the remote driving request from the remote driving device.

The first local scene data corresponding to the first location is scene data of at least one part of the driving environment corresponding to the target vehicle being at the first location.

In addition, the target vehicle transmits, by using a remote driving controller mounted on the target vehicle, the location information to the server in real time through the base station. In some embodiments, the target vehicle may further transmit driving status such as a speed, a direction, or a posture. The server may synchronize the information transmitted by the target vehicle to the remote driving device in real time.

Operation 303: The remote driving device receives the first location and the first local scene data corresponding to the first location, and displays a first environment image corresponding to the target vehicle.

Operation 304: The remote driving device transmits a driving instruction to the server in response to detecting a remote driving operation performed by the driver on the target vehicle.

The driving instruction is an instruction corresponding to the remote driving operation performed on the target vehicle based on the remote driving device.

Operation 305: The server transmits the driving instruction to the target vehicle in response to receiving the driving instruction from the remote driving device.

The target vehicle may drive based on the driving instruction, and transmit the location in real time during driving.

**In** some embodiments, the remote driving controller in the target vehicle may receive, through the base station, the driving instruction transmitted by the server. The remote driving controller may communicate with a control system of the vehicle in real time over a controller area network (CAN) of the vehicle. The remote driving controller may acquire information, such as a speed, a rotation angle of a steering wheel, and fuel consumption, of the vehicle during driving via a CAN bus. The remote driving controller has a positioning function, and the location of the vehicle may be positioned in real time by using the positioning function. The remote driving control may transmit information, such as a real-time location, a speed, a rotation angle of a steering wheel, and fuel consumption of the vehicle during driving, to the server in real time.

In some embodiments, the remote driving controller may communicate with the control system of the vehicle over the CAN of the vehicle. For example, the remote driving controller communicates with an electronic control unit (ECU), a vehicle control unit (VCU), a microcontroller unit (MCU), or the like of the vehicle via the CAN bus, to control deceleration, acceleration, turning, parking, and the like of the vehicle during driving. In this way, the vehicle may drive according to the driving instruction.

Operation 306: The server transmits a second location of the target vehicle to the remote driving device in response to receiving the second location transmitted by the target vehicle during driving based on the driving instruction.

Operation 307: The remote driving device displays a second environment image in response to receiving the second location of the target vehicle.

During driving based on the driving instruction, the target vehicle may feedback location information of the target vehicle to the server in real time according to a predetermined period. This process may be implemented based on the remote driving controller mounted on the target vehicle. In some embodiments, the target vehicle may further transmit information, such as a speed, a direction, a posture, and a driving status, of the target vehicle during driving to the server.

The server synchronizes the second location of the target vehicle to the remote driving device in real time. In this way, the remote driving device can timely display the second environment image.

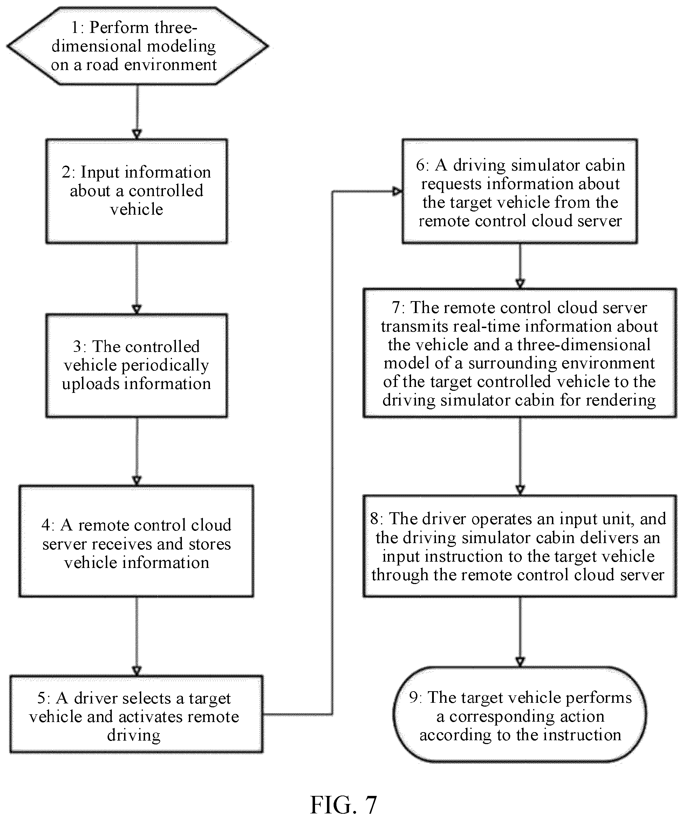

The remote driving process in this disclosure is further described below with reference to a process shown in FIG. 7. As shown in FIG. 7, a driving environment is a closed road environment, a remote driving device is a driving simulator cabin, and a server is a remote control cloud server, an entire remote driving process includes the following operations.
1. Three-dimensional modeling is performed on the closed road environment, to obtain global scene data of the closed road environment, which may include, but is not limited to, road information, building information, surrounding environment information, and the like. The global scene data of the closed road environment is acquired and stored by the remote control cloud server.
   In addition, as shown in FIG. 5, in this disclosure, three-dimensional modeling is performed on a relatively fixed environment. For example, when an update period of three-dimensional modeling is measured in days, the fixed environment in this disclosure refers to an environment device that remains unchanged in one day, such as a temporary road block. In a scene in which an environment changes frequently, such as a construction site, a higher update frequency of three-dimensional modeling is used. Correspondingly, a range of objects included in the fixed environment also changes.
2. Static information of all controlled vehicles is input in the remote control cloud server, which includes, but is not limited to, information such as the ID/serial No., the size, the color, the VIN, and the maximum rotation angle of a steering wheel of the controlled vehicle in Table 1.
3. All controlled vehicles upload real-time information, including a positioning status, a location, a speed, a posture, a driving status, and the like, to the remote control cloud server in real time through a base station.
4. The remote control cloud server receives and stores the real-time information of the controlled vehicle jointly with an ID of the controlled vehicle.
5. A remote driver views the static information of all controlled vehicles by using a remote configuration function of a driving cabin host, selects a target controlled vehicle, and activates remote driving. Another solution is as follows: when there are a plurality of remote drivers, a system automatically allocates, according to a level of a driving license input by a driver and driving license information used by a controlled vehicle that is stored in the system, a vehicle that the driver may remotely control, and provides static information associated with an ID of the allocated vehicle to a driving cabin host for the driver.
6. The driving simulator cabin using its remote configuration function activates a data receiving/transmission and storage function, to transmit, to the remote control cloud server, an instructing for requesting the real-time information about all controlled vehicles and information about a three-dimensional model of a surrounding environment of the target controlled vehicle, and wait for feedback of the remote control cloud server.
7. The driving simulator cabin using its data receiving/transmission and storage function continuously receives the real-time information about all controlled vehicles and the three-dimensional model of the surrounding environment of the target controlled vehicle. The driving simulator cabin using its remote configuration function activates a data rendering function, to render the surrounding environment of the target vehicle and another vehicle in real time, and may adjust a data rendering perspective according to a requirement, which includes a following car perspective, a driver perspective, an overhead perspective, an own perspective, and the like. In addition, because of the closed scene, "another vehicle" herein refers to another controlled vehicle. Rendering of the vehicles is performed based on the static information and the real-time information (such as a size, a color, a location, or an orientation of the vehicle) of the vehicles that are stored in the remote control cloud server. Therefore, direct acquisition of perception information from a controlled vehicle is avoided, and a communications bandwidth is reduced.
8. The driver performs an operation by using a driver input unit, and the driving simulator cabin using its data receiving/transmission and storage function receives operation information, stores the operation information, and transmits the operation information to the remote control cloud server, and the remote control cloud server delivers a related instruction to the remote driving controller of the target controlled vehicle.
9. The remote driving controller of the controlled vehicle receives the instruction from the remote control cloud server, and controls, according to the instruction, the controlled vehicle to perform an action as a response.
10. The remote driver may turn off and stop remote control by using the remote configuration function of the driving cabin host.

The remote driving method of this disclosure relates to the technical fields of cloud technology, intelligent traffic, autonomous driving, remote driving, and the like. For example, a logical volume is created by using a cloud storage technology in the cloud technology, to implement structured storage of global scene data of each environment. For another example, the remote driving method of this disclosure is applied to a transportation system such as an intelligent traffic system (ITS) or an intelligent vehicle infrastructure cooperative system (IVICS).

The ITS, also known as an intelligent transportation system, refers to a comprehensive system that effectively and comprehensively applies advanced science and technologies (such as an information technology, a computer technology, a data communications technology, a sensor technology, an electronic control technology, an automatic control theory, operations research, and artificial intelligence) to traffic and transportation, service control, and vehicle manufacture, and enhances associations among vehicles, roads, and users, to ensure security, improve efficiency, improve an environment, and save energy.

In addition, the IVICS, also known as cooperative vehicle-infrastructure system, is a development direction of the ITS. The IVICS is a safe, high-efficient, and environmental-friendly road traffic system that implements dynamic real-time information exchange between a vehicle and a vehicle and between a vehicle and a road in an all-round manner by using technologies such as advanced wireless communication and a new generation of Internet, and implements active safety control of vehicles and cooperative management of vehicles and roads based on acquisition and integration of full space-time dynamic traffic information, which implements effective cooperation among pedestrians, vehicle, and roads, ensures safe transportation, and improves travelling efficiency.

Cloud computing is a computing mode, in which computing tasks are distributed on a resource pool formed by a large quantity of computers. In this way, various application systems can obtain computing power, storage space, and information services according to requirements. A network that provides resources is referred to as a "cloud". The resources in the "cloud" appear to users to be infinitely expandable, and can be accessed at any time, used on demand, and expanded at any time, and paid for on a per-use basis.

According to division of logical functions, a platform as a service (PaaS) layer may be deployed on an infrastructure as a service (IaaS) layer, and then a software as a service (SaaS) layer is deployed on the PaaS layer, or SaaS may be directly deployed on the IaaS. PaaS is a platform on which software may drive, such as a database and a web container. SaaS is various service software, such as a web portal and a bulk short message service sender. SaaS and PaaS are upper layers relative to IaaS.

Cloud storage is a new concept extended and developed from the concept of cloud computing. A distributed cloud storage system (hereinafter to be referred as a storage system) is a storage system that integrates a large quantity of different types of storage devices (also referred to as storage nodes) in a network by using functions such as an application cluster, a grid technology, and a distributed file storage system and through application software or an application interface to enable the storage devices to cooperatively work and provide data storage and service access functions to the outside.

An existing storage method of the storage system is: creation of logical volumes. During creation of logical volumes, physical storage space is allocated for each logical volume. The physical storage space may be a storage device or a combination of magnetic disks of several storage devices. A client stores data in a logical volume, that is, stores data in the file system. The file system divides data into many segments, and each segment is an object. The object includes not only data, but also additional information such as an ID of the data. The file system writes each object into the physical storage space of the logical volume, and records storage location information of each object. In this way, when the client requests to access the data, the file system enables the client to access the data according to the storage location information of each object.

A process in which the storage system allocates the physical storage space for the logical volume is specifically as follows: physical storage space is divided into stripes in advance according to an estimated capacity (which may have a large margin relative to a capacity of an object that actually may be stored) of an object stored in a logical volume and grouping of a redundant array of independent disk (RAID), and one logical volume may be understood as one stripe. In this way, the physical storage space is allocated for the logical volume.

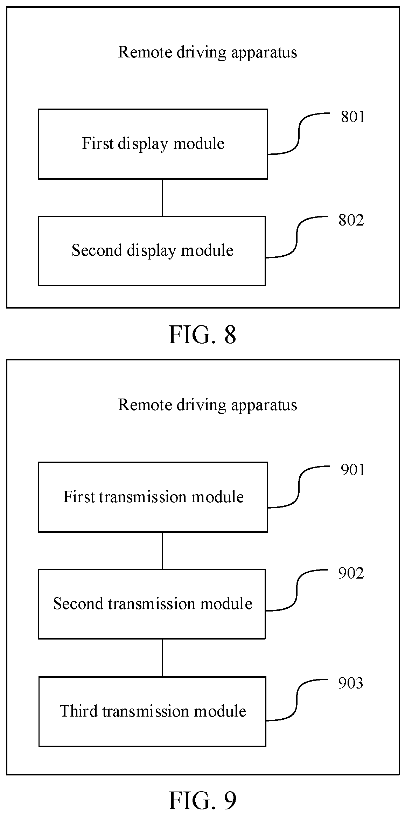

FIG. 8 is a schematic structural diagram of a remote driving apparatus according to some embodiments of this disclosure. The apparatus is applied to a remote driving device, and as shown in FIG. 8, the apparatus includes:
a first display module 801, configured to output a first environment image for a target vehicle in response to a remote driving request, the first environment image comprising at least one part of a driving environment of the target vehicle being at a first location, and the first environment image being generated based on first local scene data corresponding to the first location, the first local scene data being acquired from pre-obtained global scene data of the driving environment; and
a second display module 802, configured to output a second environment image for the target vehicle in response to a remote driving operation and receiving a second location of the target vehicle, the second environment image comprising at least one part of the driving environment of the target vehicle being at a second location.

In a possible implementation, the apparatus further includes a global scene data acquiring module, configured to:
scan the driving environment by using a scanning device, to obtain point cloud data of the driving environment; and
perform three-dimensional modeling on the driving environment based on the point cloud data, the global scene data being model data of an environment model obtained through modeling.

In a possible implementation, the apparatus further includes one of the following:
a third display module, configured to output a remote configuration page in response to a first driving trigger operation, the remote configuration page comprising vehicle information of at least one candidate vehicle, and receiving a selection operation on the target vehicle from the at least one candidate vehicle, the remote driving request being a first driving request triggered by the selection operation; and
a fourth display module, configured to output an information entry page in response to a second driving trigger operation, the information entry page comprising an entry control configured to enter driver information, and receiving a driver information entry operation based on the entry control, the remote driving request being a first driving request triggered by the driver information entry operation.

In a possible implementation, the first display module is configured to implement one of the following:
output a first image in response to the first driving request or the second driving request, the first image comprising at least one part of the driving environment of the target vehicle being at the first location and a plurality of surrounding vehicles of the target vehicle;
output a second image in response to the first driving request or the second driving request, the second image comprising at least one part of the driving environment of the target vehicle being at the first location, the plurality of surrounding vehicles, and relative location information between each of the plurality of surrounding vehicles and the target vehicle;
output a third image in response to the remote driving request being the second driving request, the third image comprising at least one part of the driving environment of the target vehicle being at the first location and vehicle information of the target vehicle allocated by a server; and
output a fourth image in response to the first driving request or the second driving request, the fourth image comprising at least one part of the driving environment of the target vehicle being at the first location and status data of the at least one part of the driving environment, and the status data comprising at least one of meteorological data, light intensity, and current status of a dynamic object located in the at least one part of the driving environment.

In a possible implementation, before the outputting a first environment image for a target vehicle in response to a remote driving request, the first display module is further configured to implement one of the following:
receive the global scene data or the first local scene data from a server in response to the first driving request or the second driving request;
receive location information of a plurality of vehicles in the driving environment from the server in response to the first driving request or the second driving request, and determining a plurality of surrounding vehicles of the target vehicle based on the location information;
receive driving status and location information of a plurality of vehicles in the driving environment from the server in response to the first driving request or the second driving request, and determining, based on the driving status and the location information, relative location information between each of the plurality of surrounding vehicles and the target vehicle, and relative driving status between the each surrounding vehicle and the target vehicle;
receive vehicle information of the target vehicle from the server in response to the remote driving request being the second driving request; and
receive status data of the at least one part of the driving environment from the server in response to the first driving request or the second driving request, the status data comprising at least one of meteorological data, light intensity, and current status of a dynamic object located in the at least one part of the driving environment.

In a possible implementation, the remote driving device at least includes a first split screen and a second split screen.

The second display module is configured to:
output the second environment image on the first split screen.

The apparatus further includes:
a first prediction module, configured to predict, based on the second location and driving status of the target vehicle, a third location of the target vehicle at a next moment; and
a fifth display module, configured to output, on the second split screen, a third environment image comprising at least one part of the driving environment of the target vehicle being at the third location.

In a possible implementation, the apparatus further includes:
a second prediction module, configured to predict, based on the driving environment and driving status information of the target vehicle, a location of the target vehicle at a current moment, to obtain a predicted location;
an acquisition module, configured to acquire, based on the predicted location, local scene data corresponding to the predicted location from the global scene data, and status data of at least one part of the driving environment of the target vehicle being at the predicted location; and
a rendering module, configured to render the local scene data and the status data that correspond to the predicted location, to obtain image data corresponding to the predicted location.

In a possible implementation, the second display module is configured to:
output, in response to the predicted location being matched with the second location, the second environment image based on the image data corresponding to the predicted location; and
acquire, in response to the predicted location not being matched with the second location, local scene data and status data that correspond to the second location, and rendering the local scene data and the status data that correspond to the second location, to obtain the second environment image.

In a possible implementation, the driving environment further comprises an associated vehicle of the target vehicle.

The apparatus further includes:
a sixth display module, configured to output driving assistance information, the driving assistance information including at least one of the following:
relative location information between the associated vehicle and the target vehicle;
operation status of the associated vehicle and operation status of the target vehicle;
relative operation progress between the associated vehicle and the target vehicle; and
relative operating condition information between the associated vehicle and the target vehicle.

In a possible implementation, the target vehicle is any one of a plurality of controlled vehicles controlled by the remote driving device.

The apparatus further includes:
a location information acquiring module, configured to acquire location information of non-controlled objects in the driving environment and location information of surrounding controlled vehicles of the target vehicle;
a road condition collecting module, configured to determine traffic information of a surrounding environment of the target vehicle based on the location information of the non-controlled objects and the location information of surrounding controlled vehicles;
a prompt module, configured to output, in response to that the traffic information of the target vehicle satisfies a preset condition, prompt information, the prompt information indicating that an autonomous driving condition is satisfied; and
an autonomous driving activating module, configured to activate an autonomous driving function of the target vehicle in response to receiving an autonomous driving activation operation performed on the prompt information.

According to the remote driving apparatus provided in this disclosure, the first environment image that includes the at least one part of the driving environment corresponding to the first location is displayed. The global scene data is pre-obtained based on the driving environment. Therefore, the first environment image can be directly generated based on the first local scene data corresponding to the first location. When the remote driving operation is performed on the target vehicle, the second environment image of the environment corresponding to the second location can be generated based on the second local scene data corresponding to the second location and displayed. The surrounding environment of the vehicle can be displayed based on the local scene data and the location of the vehicle. The target vehicle may not transmit a captured video of the surrounding environment in real time, whereby a bandwidth occupied by data transmission during remote driving is significantly reduced. Consequently, the problem of excessively high bandwidth occupancy caused by remote driving based on real-time video image transmission is effectively solved, and a requirement for a network bandwidth is reduced, which helps improve stability of remote driving. In this way, the driver can stably control the vehicle with a low delay, to improve actual driving efficiency.

FIG. 9 is a schematic structural diagram of a remote driving apparatus according to some embodiments of this disclosure. The apparatus is applied to a server, and as shown in FIG. 9, the apparatus includes:
a first transmission module 901, configured to transmit, in response to receiving a remote driving request from a remote driving device, a first location of a target vehicle and first local scene data corresponding to the first location to the remote driving device, the first local scene data being acquired from pre-obtained global scene data of a driving environment and used for the remote driving device to display a first environment image, the first environment image comprising at least one part of the driving environment of the target vehicle being at a first location;
a second transmission module 902, configured to transmit, in response to receiving a driving instruction from the remote driving device, the driving instruction to the target vehicle, the driving instruction being triggered by the remote driving device performing a remote driving operation on the target vehicle; and
a third transmission module 903, configured to transmit, in response to receiving a second location of the target vehicle driving based on the driving instruction, the second location of the target vehicle to the remote driving device, so that the remote driving device displays a second environment image, the second environment image comprising at least one part of the driving environment of the target vehicle being at a second location.

According to the remote driving apparatus provided in this disclosure, the first environment image that includes the at least one part of the driving environment corresponding to the first location is displayed. The global scene data is pre-obtained based on the driving environment. Therefore, the first environment image can be directly generated based on the first local scene data corresponding to the first location. When the remote driving operation is performed on the target vehicle, the second environment image of the environment corresponding to the second location can be generated based on the second local scene data corresponding to the second location and displayed. The surrounding environment of the vehicle can be displayed based on the local scene data and the location of the vehicle. The target vehicle may not transmit a captured video of the surrounding environment in real time, whereby a bandwidth occupied by data transmission during remote driving is significantly reduced. Consequently, the problem of excessively high bandwidth occupancy caused by remote driving based on real-time video image transmission is effectively solved, and a requirement for a network bandwidth is reduced, which helps improve stability of remote driving. In this way, the driver can stably control the vehicle with a low delay, to improve actual driving efficiency.

The apparatus in the embodiments of this disclosure may perform the method provided in the embodiments of this disclosure, and an implementation principle of the apparatus is similar to that of the method. The actions performed by the modules in the apparatus in the embodiments of this disclosure correspond to the operation in the method in the embodiments of this disclosure. For detailed descriptions of the functions of the modules in the apparatus, refer to the foregoing descriptions of the corresponding methods. Details are not described herein again.

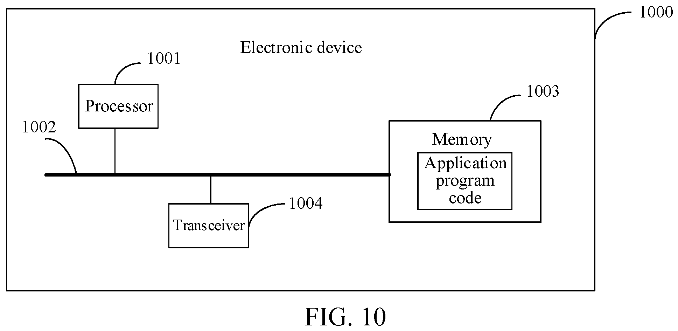

FIG. 10 is a schematic structural diagram of an electronic device according to some embodiments of this disclosure. As shown in FIG. 10, the electronic device includes: a memory, a processor, and a computer program stored in the memory. The processor executes the computer program to implement the operations in the remote driving method. Compared with the related art, this disclosure achieves the following beneficial effects.

According to the remote driving method provided in this disclosure, the first environment image that includes the at least one part of the driving environment corresponding to the first location is displayed. The global scene data is pre-obtained based on the driving environment. Therefore, the first environment image can be directly generated based on the first local scene data corresponding to the first location. When the remote driving operation is performed on the target vehicle, the second environment image of the environment corresponding to the second location can be generated based on the second local scene data corresponding to the second location and displayed. The surrounding environment of the vehicle can be displayed based on the local scene data and the location of the vehicle. The target vehicle may not transmit a captured video of the surrounding environment in real time, whereby a bandwidth occupied by data transmission during remote driving is significantly reduced. Consequently, the problem of excessively high bandwidth occupancy caused by remote driving based on real-time video image transmission is effectively solved, and a requirement for a network bandwidth is reduced, which helps improve stability of remote driving. In this way, the driver can stably control the vehicle with a low delay, to improve actual driving efficiency.

The embodiments of this disclosure provide an electronic device. As shown in FIG. 10, an electronic device 1000 includes: a processor 1001 and a memory 1003. The processor 1001 is connected to the memory 1003, for example, via a bus 1002. The electronic device 1000 may further include a transceiver 1004. The transceiver 1004 is configured to implement data interaction between the electronic device and another electronic device, such as data transmission and/or data receiving. In addition, in an actual application, a quantity of transceivers 1004 is not limited to one, and a structure of the electronic device 1000 does not constitute a limitation on the embodiments of this disclosure.

The processor 1001 may be a central processing unit (CPU), a general-purpose processor, a digital signal processor (DSP), an application-specific integrated circuit (ASIC), a field programmable gate array (FPGA) or another programmable logic device, a transistor logic device, a hardware component, or any combination thereof. It may implement or execute various exemplary logical blocks, modules, and circuits described with reference to content disclosed in this disclosure. Alternatively, the processor 1001 may be a combination of processors that implements a computing function, such as a combination of one or more microprocessors, or a combination of a DSP and a microprocessor.

The bus 1002 may include a path for transferring information between the foregoing components. The bus 1002 may be a Peripheral Component Interconnect (PCI) bus, an Extended Industry Standard Architecture (EISA) bus, or the like. The bus 1002 may be classified into an address bus, a data bus, a control bus, or the like. For ease of representation, the bus is represented by only one bold line in FIG. 10, but this does not indicate that there is only one bus or only one type of bus.

The memory 1003 may be a read-only memory (ROM) or another type of static storage device that can store static information and instructions, a random-access memory (RAM) or another type of dynamic storage device that can store information and instructions, an electrically erasable programmable ROM (EEPROM), a compact disc ROM (CD-ROM) or another optical storage, an optical disk storage (including a CD, a laser disk, an optical disk, a digital versatile disc, a Blu-ray Disc, and the like), a magnetic disk storage medium/another magnetic storage device, or any other medium that can carry or store a computer program and can be read by a computer. This is not limited herein.

The memory 1003 is configured to store a computer program for performing the embodiments of this disclosure, which is controlled and executed by the processor 1001. The processor 1001 is configured to execute the computer program stored in the memory 1003 to implement the operations according to the foregoing method embodiments.

The electronic device includes, but is not limited to, a server, a terminal, a cloud computing center device, a remote driving device, a driving simulator cabin, and the like.

The embodiments of this disclosure provide a computer-readable storage medium, which has a computer program stored therein. A processor executes the computer program to implement the operations and corresponding content in the foregoing method embodiments.

The embodiments of this disclosure further provide a computer program product, which includes a computer program. A processor executes the computer program to implement the operations and corresponding content in the foregoing method embodiments.

Those skilled in the art may understand that, unless otherwise specifically stated, the singular forms "a", "an", "the", and "this" used herein may also include plural forms. The terms "include" and "comprise" used in the embodiments of this disclosure mean that corresponding features may be implemented as presented features, information, data, steps, or operations, but do not exclude implementation as other features, information, data, steps, or operations supported in the technical field.

The terms such as "first", "second", "third", "fourth", "1", and "2" (if any) in the description, the claims, and the drawings of this disclosure are used to distinguish similar objects and not necessarily used to describe a specific order or sequence. Such used data is interchangeable where appropriate, and the embodiments of this disclosure described here may be implemented in an order other than that illustrated or described in the drawings or text.

Although the operations are displayed sequentially according to the instructions of the arrows in the flowcharts of the embodiments of this disclosure, these operations are not necessarily performed sequentially according to the sequence instructed by the arrows. Unless otherwise explicitly specified, in some implementation scenes of the embodiments of this disclosure, the implementation operations in each flowchart may be performed in another sequence according to requirements. In addition, some or all of the operations in each flowchart may include a plurality of sub-operations or a plurality of stages based on an actual implementation scene. Some or all of these sub-operations or stages may be performed at a same moment, and each of these sub-operations or stages may be separately performed at a different moment. In a scene with different implementation moments, an implementation sequence of these sub-operations or stages may be flexibly configured according to a requirement. This is not limited in the embodiments of this disclosure.

The above are some implementations of the implementation scene of this disclosure. Those of ordinary skill in the art may adopt other similar implementation manners based on the technical idea of this disclosure without departing from the concept of the technical solutions of this disclosure, and these similar implementation manners still fall within the scope of protection of the embodiments of this disclosure.

## Claims

1. A remote driving method, executable by a remote driving device, and comprising:
outputting a first environment image for a target vehicle in response to a remote driving request, the first environment image comprising at least one part of a driving environment of the target vehicle being at a first location, and the first environment image being generated based on first local scene data corresponding to the first location, the first local scene data being acquired from pre-obtained global scene data of the driving environment; and
outputting a second environment image for the target vehicle in response to a remote driving operation and receiving a second location of the target vehicle, the second environment image comprising at least one part of the driving environment of the target vehicle being at a second location.

2. The method according to claim 1, further comprising one of the following:
outputting a remote configuration page in response to a first driving trigger operation, the remote configuration page comprising vehicle information of at least one candidate vehicle, and receiving a selection operation on the target vehicle among the at least one candidate vehicle, the remote driving request being a first driving request triggered by the selection operation; and
outputting an information entry page in response to a second driving trigger operation, the information entry page comprising an entry control configured to enter driver information, and receiving a driver information entry operation based on the entry control, the remote driving request being a first driving request triggered by the driver information entry operation.

3. The method according to claim 1 or 2, wherein the outputting a first environment image for a target vehicle in response to a remote driving request, comprises one of the following:
outputting a first image in response to the first driving request or the second driving request, the first image comprising at least one part of the driving environment of the target vehicle being at the first location and a plurality of surrounding vehicles of the target vehicle;
outputting a second image in response to the first driving request or the second driving request, the second image comprising at least one part of the driving environment of the target vehicle being at the first location, the plurality of surrounding vehicles, and relative location information between each of the plurality of surrounding vehicles and the target vehicle;
outputting a third image in response to the remote driving request being the second driving request, the third image comprising at least one part of the driving environment of the target vehicle being at the first location and vehicle information of the target vehicle allocated by a server; and
outputting a fourth image in response to the first driving request or the second driving request, the fourth image comprising at least one part of the driving environment of the target vehicle being at the first location and status data of the at least one part of the driving environment, and the status data comprising at least one of meteorological data, light intensity, and current status of a dynamic object located in the at least one part of the driving environment.

4. The method according to claim 1 or 2, before the outputting a first environment image for a target vehicle in response to a remote driving request, further comprising one of the following:
receiving the global scene data or the first local scene data from a server in response to the first driving request or the second driving request;
receiving location information of a plurality of vehicles in the driving environment from the server in response to the first driving request or the second driving request, and determining a plurality of surrounding vehicles of the target vehicle based on the location information;
receiving driving status and location information of a plurality of vehicles in the driving environment from the server in response to the first driving request or the second driving request, and determining, based on the driving status and the location information, relative location information between each of the plurality of surrounding vehicles and the target vehicle, and relative driving status between the each surrounding vehicle and the target vehicle;
receiving vehicle information of the target vehicle from the server in response to the remote driving request being the second driving request; and
receiving status data of the at least one part of the driving environment from the server in response to the first driving request or the second driving request, the status data comprising at least one of meteorological data, light intensity, and current status of a dynamic object located in the at least one part of the driving environment.

5. The method according to claim 1, wherein the remote driving device at least comprises a first split screen and a second split screen;
the outputting a second environment image for the target vehicle in response to a remote driving operation and receiving a second location of the target vehicle comprises:
outputting the second environment image on the first split screen; and
the method further comprises:
predicting, based on the second location and driving status of the target vehicle, a third location of the target vehicle at a next moment; and
outputting, on the second split screen, a third environment image comprising at least one part of the driving environment of the target vehicle being at the third location.

6. The method according to claim 1, before the outputting a second environment image for the target vehicle in response to a remote driving operation and receiving a second location of the target vehicle, further comprising:
predicting, based on the driving environment and driving status information of the target vehicle, a location of the target vehicle at a current moment, to obtain a predicted location;
acquiring, based on the predicted location, local scene data corresponding to the predicted location from the global scene data, and status data of at least one part of the driving environment of the target vehicle being at the predicted location; and
rendering the local scene data and the status data that correspond to the predicted location, to obtain image data corresponding to the predicted location.

7. The method according to claim 6, wherein the outputting a second environment image for the target vehicle in response to a remote driving operation and receiving a second location of the target vehicle comprises:
outputting, in response to the predicted location being matched with the second location, the second environment image based on the image data corresponding to the predicted location; and
acquiring, in response to the predicted location not being matched with the second location, local scene data and status data that correspond to the second location, and rendering the local scene data and the status data that correspond to the second location, to obtain the second environment image.

8. The method according to claim 1, wherein the driving environment further comprises an associated vehicle of the target vehicle; and
the method further comprises:
outputting driving assistance information, the driving assistance information comprising at least one of the following:
relative location information between the associated vehicle and the target vehicle;
operation status of the associated vehicle and operation status of the target vehicle;
relative operation progress between the associated vehicle and the target vehicle; and
relative operating condition information between the associated vehicle and the target vehicle.

9. The method according to claim 1, wherein the target vehicle is one of a plurality of controlled vehicles controlled by the remote driving device; and
the method further comprises:
acquiring location information of non-controlled objects in the driving environment and location information of surrounding controlled vehicles of the target vehicle;
determining traffic information of a surrounding environment of the target vehicle based on the location information of the non-controlled objects and the location information of surrounding controlled vehicles;
outputting, in response to that the traffic information of the target vehicle satisfies a preset condition, prompt information, the prompt information indicating that an autonomous driving condition is satisfied; and
activating an autonomous driving function of the target vehicle in response to receiving an autonomous driving activation operation performed on the prompt information.

10. A remote driving method, executable by a server, and comprising:
transmitting, in response to receiving a remote driving request from a remote driving device, a first location of a target vehicle and first local scene data corresponding to the first location to the remote driving device, the first local scene data being acquired from pre-obtained global scene data of a driving environment and used for the remote driving device to display a first environment image, the first environment image comprising at least one part of the driving environment of the target vehicle being at a first location;
transmitting, in response to receiving a driving instruction from the remote driving device, the driving instruction to the target vehicle, the driving instruction being triggered by the remote driving device performing a remote driving operation on the target vehicle; and
transmitting, in response to receiving a second location of the target vehicle driving based on the driving instruction, the second location of the target vehicle to the remote driving device, so that the remote driving device displays a second environment image, the second environment image comprising at least one part of the driving environment of the target vehicle being at a second location.

11. A remote driving apparatus, comprising:
a first display module, configured to output a first environment image for a target vehicle in response to a remote driving request, the first environment image comprising at least one part of a driving environment of the target vehicle being at a first location, and the first environment image being generated based on first local scene data corresponding to the first location, the first local scene data being acquired from pre-obtained global scene data of the driving environment; and
a second display module, configured to output a second environment image for the target vehicle in response to a remote driving operation and receiving a second location of the target vehicle, the second environment image comprising at least one part of the driving environment of the target vehicle being at a second location.

12. The apparatus according to claim 11, further comprising one of the following:
a third display module, configured to output a remote configuration page in response to a first driving trigger operation, the remote configuration page comprising vehicle information of at least one candidate vehicle, and receiving a selection operation on the target vehicle from the at least one candidate vehicle, the remote driving request being a first driving request triggered by the selection operation; and
a fourth display module, configured to output an information entry page in response to a second driving trigger operation, the information entry page comprising an entry control configured to enter driver information, and receiving a driver information entry operation based on the entry control, the remote driving request being a first driving request triggered by the driver information entry operation.

13. The apparatus according to claim 11 or 12, wherein the first display module is configured to implement one of the following:
output a first image in response to the first driving request or the second driving request, the first image comprising at least one part of the driving environment of the target vehicle being at the first location and a plurality of surrounding vehicles of the target vehicle;
output a second image in response to the first driving request or the second driving request, the second image comprising at least one part of the driving environment of the target vehicle being at the first location, the plurality of surrounding vehicles, and relative location information between each of the plurality of surrounding vehicles and the target vehicle;
output a third image in response to the remote driving request being the second driving request, the third image comprising at least one part of the driving environment of the target vehicle being at the first location and vehicle information of the target vehicle allocated by a server; and
output a fourth image in response to the first driving request or the second driving request, the fourth image comprising at least one part of the driving environment of the target vehicle being at the first location and status data of the at least one part of the driving environment, and the status data comprising at least one of meteorological data, light intensity, and current status of a dynamic object located in the at least one part of the driving environment.

14. The apparatus according to claim 11 or 12, wherein before the outputting a first environment image for a target vehicle in response to a remote driving request, the first display module is configured to implement one of the following:
receive the global scene data or the first local scene data from a server in response to the first driving request or the second driving request;
receive location information of a plurality of vehicles in the driving environment from the server in response to the first driving request or the second driving request, and determining a plurality of surrounding vehicles of the target vehicle based on the location information;
receive driving status and location information of a plurality of vehicles in the driving environment from the server in response to the first driving request or the second driving request, and determining, based on the driving status and the location information, relative location information between each of the plurality of surrounding vehicles and the target vehicle, and relative driving status between the each surrounding vehicle and the target vehicle;
receive vehicle information of the target vehicle from the server in response to the remote driving request being the second driving request; and
receive status data of the at least one part of the driving environment from the server in response to the first driving request or the second driving request, the status data comprising at least one of meteorological data, light intensity, and current status of a dynamic object located in the at least one part of the driving environment.

15. The apparatus according to claim 11, wherein the remote driving device at least comprises a first split screen and a second split screen;
the second display module is configured to output the second environment image on the first split screen; and
the apparatus further comprises:
a first prediction module, configured to predict, based on the second location and driving status of the target vehicle, a third location of the target vehicle at a next moment; and
a fifth display module, configured to output, on the second split screen, a third environment image comprising at least one part of the driving environment of the target vehicle being at the third location.

16. A remote driving apparatus, comprising:
a first transmission module, configured to transmit, in response to receiving a remote driving request from a remote driving device, a first location of a target vehicle and first local scene data corresponding to the first location to the remote driving device, the first local scene data being acquired from pre-obtained global scene data of a driving environment and used for the remote driving device to display a first environment image, the first environment image comprising at least one part of the driving environment of the target vehicle being at a first location;
a second transmission module, configured to transmit, in response to receiving a driving instruction from the remote driving device, the driving instruction to the target vehicle, the driving instruction being triggered by the remote driving device performing a remote driving operation on the target vehicle; and
a third transmission module, configured to transmit, in response to receiving a second location of the target vehicle driving based on the driving instruction, the second location of the target vehicle to the remote driving device, so that the remote driving device displays a second environment image, the second environment image comprising at least one part of the driving environment of the target vehicle being at a second location.

17. A remote driving device, comprising a processor and a display,
the display being configured to implement the remote driving method according to any one of claims 1 to 3 and 5 to 9; and the processor being configured to implement the remote driving method according to any one of claims 1 to 9.

18. An electronic device, comprising a memory, a processor, and a computer program stored in the memory, the processor executing the computer program to implement the remote driving method according to any one of claims 1 to 10.

19. A computer-readable storage medium, having a computer program stored therein, a processor executing the computer program to implement the remote driving method according to any one of claims 1 to 10.

20. A computer program product, comprising a computer program, a processor executing the computer program to implement the remote driving method according to any one of claims 1 to 10.
